# EUROPEAN PATENT APPLICATION

(11) **EP 4 368 477 A1**
(43) Date of publication of application: **15.05.2024**
(21) Application number: 23155905.5
(22) Date of filing: 09.02.2023
(51) Int. Cl.: B62D 15/02, B62D 5/04

(54) **METHODS AND SYSTEMS FOR A STEER-BY-WIRE SYSTEM WITH SENSOR DEVICES**

(30) Priority: 14.11.2022 US 202217986799
(71) Applicant: Polestar Performance AB, 405 31 Gothenburg (SE)
(72) Inventor: ROSE, Dominic, Warwick, CV34 4QH (GB)
(74) Representative: Zacco Sweden AB

(57) **Abstract**

The present disclosure relates to a "steer-by-wire system with sensor devices," which is an electric power steering system in which a steering assist motor is disposed such that the axis of the steering assist motor is parallel to a rack bar. The system uses an angle sensor in the gear housing to monitor the ball nut angle which provides accurate steer angle information and the required redundancy when used in conjunction with the MPS information. Thus, removing the necessity for the pinion shaft which, in turn, removes the necessity for rack bar preload because there is no interface or required mesh between a pinion shaft and rack bar teeth. Other components within a steer-by-wire system, otherwise necessary, may be similarly removed while utilizing the concepts as described herein.

## Description

### TECHNICAL FIELD

The present disclosure relates generally to steer-by-wire systems in vehicles, and more specifically, embodiments are directed to applications for ball nut assembly angle sensor(s) within the steer-by-wire system.

### BACKGROUND

Most conventional vehicles use a mechanical system boosted by hydraulic power for the mechanics of steering. Most vehicles also utilize power steering to reduce the amount of force it takes to turn the steering wheel. This was traditionally accomplished through hydraulic power, which is generated by a hydraulic actuator that assists the turning of the steering gear. A hydraulic pump can run off the rotation of the engine or can be driven by an electric motor (referred to as Electro-Hydraulic Power Steering). In addition, there is an electric power steering (hereinafter, referred to as "EPS") system that may remove the hydraulic components as it uses an electric motor to drive traditional steering linkage (the pitman arm) within the mechanical system.

Conventional EPS systems assist a driver's steering operation by applying torque generated by a motor to a steering mechanism of a vehicle. For example, an EPS system includes a rack-and-pinion mechanism that serves as a steering mechanism. The rack-and-pinion mechanism changes the orientation of wheels by converting the rotation of a pinion caused by a steering operation into a liner motion of a rack shaft (steered shaft) meshed with the pinion. The rack shaft is provided with a ball screw profile that, when driven laterally by the circulating ball nut and contained ball bearings converts the rotational output from a motor via a belt drive system into a linear motion of the rack shaft. That is, the torque generated by the motor is converted into an axial force of the rack shaft in its axial direction, so that the steering operation is assisted. Generally, a front axle steering gear contains the pinion shaft and an angle sensor which are used to determine the absolute steer angle, in addition to the motor position angle sensor (MPS), so that accurate steer angle information is available in the steering gear's electronic power pack (EPP). The EPP is defined as the Assembly of the electronic control unit (ECU) and Motor. The steer angle being an important aspect of a vehicle's safety system as it transmits the steering wheels rate of turn, wheel angle, and other important information to the vehicles computer. If there is a fault in the signal, the computer can raise a diagnostic trouble code (DTC) warning to the driver and also disable the vehicle's stability control.

Conventional systems use sensors mounted to an input shaft and a harness that runs from the pinion shaft sensor directly back to the EPP, which means there is no monitoring of the ball nut assembly. Other example systems may remove the input shaft, which results in a pinion driven system. Such systems, effectively, are equivalent to a dual pinion system (commonly known as EPSdp). These systems are limited in terms of maximum load (e.g., less than 15kN) due to the load capability of the worm gear arrangement and typically house the MPS and steer angle sensor in the EPP. Pinion driven systems also suffer from lower mechanical efficiency due to inefficiencies of the worm screw contact angle to worm gear's teeth.

While electric power steering removes the hydraulic components, they retain the traditional mechanical steering linkage (e.g., the pinion shaft). Improved steer-by-wire (SbW) technology may remove and/or reduce the requirement for steering linkage.

These and other advantages and features will become more apparent from the following description taken in conjunction with the drawings.

### SUMMARY

Various embodiments disclosed herein relate to steer-by-wire systems in vehicles, and more specifically, embodiments directed to applications for ball nut assembly angle sensor(s) within the steer-by-wire system.

One embodiment of the present disclosure provides an EPS system comprising a housing secured to a vehicle body, wherein the housing is disposed such that a tubular housing extends across a vehicle. The housing comprising a rack bar extending through the tubular housing configured to move in a linear motion. The linear motion changes an angle of one or more wheels relative to the vehicle in which the one or more wheels are coupled. An electric power pack (EPP) supplies power which rotates an output motor shaft. In embodiments, a drive assembly may be coupled to the tubular body and the electric power pack. The drive assembly comprises a drive belt, a drive pulley and a ball nut assembly, which facilitates the conversion of rotary movement from the output motor shaft into lateral movement of the rack bar. In embodiments, a plurality of sensors is provided and configured to sense input signals based on characteristics of the vehicle. The drive belt may be coupled to the output motor shaft and ball nut assembly, wherein the drive belt transmits rotary motion to a cylindrical pulley coupled to the ball nut assembly and the tubular body. The rotary motion actuates the ball nut assembly based on an input of rotary motion of a steering wheel and the sensed input signals which is then converted to a torque or angle applied by the steering gear's motor. In response to ball nut assembly actuation, rack bar linear motion is actuated and therefore the angle of the one or more wheels is adjusted.

One embodiment of the present disclosure provides a steering system including a steering feedback module (SFM) and an electric power steering (EPS) gear. In embodiments, the SFM may include an SFM motor, one or more sensors associated with the SFM (SFM sensor) which may include a torque and/or angle sensor and a first ECU to control the SFM and the one or more SFM input signals. The SFM sensors configured to sense one or more SFM input signals based on an input of rotary motion of a steering wheel. In some aspects herein the one or more SFM input signals based on the rotary motion input of the steering wheel include at least one of a motor position information, steering wheel torque information and steering wheel angle information. In embodiments, the electric power steering system (EPS) may include an EPS motor, one or more sensors associated with the EPS (EPS sensors), a ball nut assembly, a rack bar and a second ECU to control the one or more EPS. The one or more sensors configured to sense one or more EPS input signals based on vehicle characteristics. In embodiments, the one or more input signals may include a motor position sensed in the EPS motor or a ball nut angle sensed within the ball nut assembly. Thus, in response to the input of rotary motion of the steering wheel and based on SFM input signals and EPS input signals, the rack bar and angles of one or more wheels, coupled to the rack bar of a vehicle, are adjusted to a determined extent based on the SFM input signals and EPS input signals.

Another embodiment of the present disclosure includes a method for executing an EPS system. A plurality of sensors is included and configured to sense one or more input signals based on characteristics of a vehicle, which may be associated with a steer-by-wire system. In embodiments, a plurality of steering characteristics may be determined based on the one or more input signals and based on those steering characteristics, used to sufficiently adjust one or more road wheel angles of the vehicle, which are coupled to a rack bar. The one or more angles of the road wheels being adjusted by the rack bar's linear motion. This motion is generated by the drive mechanism based on the determined plurality of outputs from the SFM.

In some aspects herein, at least the ball nut angle and the EPS motor position are used to determine the extent of rack bar alteration without a pinion shaft.

Another embodiment of the disclosure herein provides a method for accurately altering steering wheel angles of a vehicle. The method comprising the steps of:
sensing, by a plurality of sensors, one or more input signals based on a plurality of vehicle characteristics wherein the plurality of sensors are associated with any steer-by-wire system (or with any of the systems herein), wherein one or more sensors of the plurality of sensors are sensing a ball nut angle within a ball nut assembly as one of the plurality of input signals. Further, the method comprises the steps of determining a plurality of steering characteristics based on the one or more input signals and actuating, by a drive assembly, linear motion of a rack bar based on the determined plurality of steering characteristics such that one or more wheel angles of the vehicle are altered.

In some aspects herein sensing the ball nut angle includes providing steer angle information to accurately (for) determine/determining at least one of a required amount of rack bar linear motion, steering speed and torque required for rack bar linear motion actuated by the drive assembly.

In some aspects, the method further comprises the steps of determining a plurality of steering characteristics which comprises at least one of a required amount of rack bar linear motion, steering speed and torque required for rack bar linear motion, actuated by the drive assembly. In some aspects, as actuated by the drive assembly, without a pinion shaft. E.g., without any force/torque input/output from the pinion shaft or without a pinion shaft as such included in the drive assembly i.e. a pinion shaft-free drive assembly.

The sensing one or more input signals based on characteristics of the vehicle may include at least one characteristic from the rotary motion of the steering wheel including steering wheel torque information, steering wheel angle information and motor position information, wherein said information is sensed by at least one of the plurality of sensors.

In other aspects sensing one or more input signals based on characteristics of the vehicle include at least one characteristic from the vehicle, consisting of at least one of motor position information, motor current information, tie rod force information and vehicle speed information, wherein said information is sensed by at least one of the plurality of sensors.

Another embodiment of the present disclosure includes a steering system comprising a vehicle control unit (VCU) configured to transmit and receive a first set of vehicle characteristics from one or more external sensors and calculate a required steer angle based on the first set of vehicle characteristics and an electric power steering system (EPS). The EPS comprising one or more EPS sensors associated with the EPS, wherein the EPS sensors are configured to sense one or more EPS input signals based on a second set of vehicle characteristics. An EPS motor may be configured to provide power to an output motor shaft for rotary movement and be integrated with at least one of the EPS sensors to sense an EPS motor position, wherein at least one of the EPS input signals includes the EPS motor position. A ball nut assembly may be integrated with at least one of the EPS sensors configured to sense a ball nut angle of the ball nut assembly, wherein at least one of the EPS input signals includes the ball nut angle. A rack bar may be included, wherein the rack bar moves about a linear axis actuated by a drive assembly. The drive assembly may include a drive belt coupled to the output motor shaft and the ball nut assembly such that the drive belt transmits rotary motion, by rotary movement of the output shaft, to a cylindrical pulley coupled to the ball nut assembly and further transmits rotary motion to the ball nut assembly and an ECU to control the EPS and the one or more EPS input signals, wherein the VCU and the ECU are communicatively coupled. The VCU may transmit the required steer angle to the ECU to activate the drive assembly, wherein the rack bar and angles of one or more wheels, coupled to the rack bar of the vehicle, are altered to a determined extent based on the first set of vehicle information and the EPS input signals. The first set of vehicle information includes one of wheel speed or yaw rate, sensed by the one or more external sensors or signals from an advanced driver assistance system.

The above summary is not intended to describe each illustrated embodiment or every implementation of the subject matter hereof. The figures and the detailed description that follow more particularly exemplify various embodiments.

All references to "a/an/the [element, device, component, means, step, etc.]" are to be interpreted openly as referring to at least one instance of said element, device, component, means, step, etc., unless explicitly stated otherwise.

### BRIEF DESCRIPTION OF THE DRAWINGS

Subject matter hereof may be more completely understood in consideration of the following detailed description of various embodiments in connection with the accompanying figures, in which:
FIG. 1 illustrates a side view of a steer-by-wire system with sensor devices, according to embodiments.
FIG. 2A illustrates a cross-sectional view of a drive mechanism of a steer-by-wire system, according to embodiments.
FIG. 2B illustrates a side view of a drive mechanism of a steer-by-wire system, according to embodiments.
FIG. 2C illustrates a side view of a tie rod assembly, according to embodiments.
FIG. 3A illustrates a first portion of a high-level block diagram of communication via signals and energy transfer between components of a steer-by-wire system, according to embodiments.
FIG. 3B illustrates a second portion of the high-level block diagram of FIG. 3A of communication via signals and energy transfer between components of a steer-by-wire system, according to embodiments.
FIG. 4A illustrates a first portion of a high-level block logic diagram of a steer-by-wire system with sensor devices that processes various signals and information configured to facilitate steering of a vehicle and steering feedback to the driver, according to embodiments.
FIG. 4B illustrates a second portion of the high-level block logic diagram of FIG. 4A of a steer-by-wire system with sensor devices that processes various signals and information configured to facilitate steering of a vehicle and steering feedback to the driver, according to embodiments.
FIG. 5A illustrates a first portion of a high-level block diagram of communication via signals and energy transfer between components of a steer-by-wire system, according to embodiments.
FIG. 5B illustrates a second portion of the high-level block diagram of FIG. 5A of communication via signals and energy transfer between components of a steer-by-wire system, according to embodiments.
FIG. 6A illustrates a first portion of a high-level block logic diagram of a steer-by-wire system with sensor devices that processes various signals and information configured to facilitate steering of a vehicle, according to embodiments.
FIG. 6B illustrates a second portion of the high-level block logic diagram of FIG. 6A of a steer-by-wire system with sensor devices that processes various signals and information configured to facilitate steering of a vehicle, according to embodiments.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by the claims.

### DETAILED DESCRIPTION

While steer-by-wire (SbW) systems use electric motors to turn the road wheels and adjust the steering wheel, sensors to determine how much steering force to apply, and devices that provide tactile feedback to the driver, there is a present need for improved SbW technology and improved applications utilizing SbW technology.

Even with electric power steering, one of the biggest challenges is the limitations involving the mechanical component(s). Described herein is to create a new type of "SbW system with sensor devices" within a steer-by-wire system, which does not use a pinion, torsion bar, input shaft or rack preload yoke. Typically, in part, the pinion/input shaft is utilized in combination with an angle sensor to monitor the steer angle for vehicle steering operations. Replacing conventional steering components with SbW technology, described herein, removes the necessity for an input shaft assembly, which facilitates the removal of many other, otherwise necessary, components. For example, the components that may be removed include the input shaft, shaft bearings (upper and lower), the torsion bar, the pinion shaft, the sensor housing (including casting, cover plates fixings and seals), the rack preload yoke (including spring(s) fixings and seals), the requirement of complex forming processes such as rack teeth broaching, etc. The removal of such components offers numerous benefits, which include mass reduction (estimated at 2-3 Kg); piece cost reduction (estimated at 5-10%); build complexity reduction; reduced frictional variation (e.g., friction spikes) and system frictional losses (making the system more efficient in terms of energy usage); reduced operating noise; improved sustainability (e.g., significant reduction in use of steel (shaft, preload yoke and bearings) and aluminium (e.g. housing casting)); and more.

Hereinafter, the so-called "SbW system with sensor devices" according to an embodiment of the invention will be described with reference to the accompanying drawings. A "SbW system with sensor devices" is an electric power steering system in which a steering assist motor is disposed such that the axis of the steering assist motor is parallel to a rack bar. The system uses an angle sensor in the gear housing to monitor the ball nut angle which will provide accurate steer angle information and the required redundancy when used in conjunction with the MPS information. Thus, removing the need for the pinion shaft also which, in turn, removes the need for rack bar preload because there is no interface or required mesh between a pinion shaft and rack bar teeth.

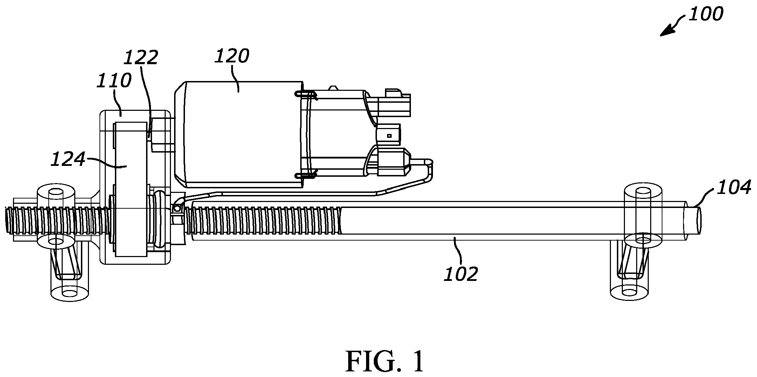

As illustrated in FIG. 1, a middle section of an EPS steering system 100 includes a housing 102 secured to a vehicle body (not illustrated). Housing 102 is disposed such that a rack bar 104, having a tubular shape, extends in the lateral direction of the vehicle body (the lateral direction in FIG. 1) passes through the housing 102. Road wheels (not illustrated) are respectively coupled to opposite ends of the rack bar 104 via tie rods (not illustrated). As the rack bar 104 moves in its axial direction, the orientation of the road wheels may be changed relative to the vehicle.

Housing 102 comprises a drive assembly housing 110. In embodiments, the drive assembly housing 110 may be positioned near the left/right or center of the housing 102 depending on the vehicle's packaging requirements. In embodiments, an EPP 120, comprising an electric motor and electronic control unit (ECU) used as a motor controller may be secured to the upper portion (left or right side depending on vehicle packaging requirements) of the drive assembly housing 110. In embodiments, the EPP 120 may comprise an output motor shaft (OMS) 122 that extends along an axis parallel to the rack bar 104 and may be inserted into the drive assembly 110 through a side wall of the drive assembly housing 110. In embodiments, EPP 120 has a motor position angle sensor (not illustrated) to monitor and transmit MPS information, such as the angular position and velocity of the motor's rotor shaft. In embodiments, while various sensors are described herein in generality, for illustrative purposes, any sensor type may be utilized, such as hall effect sensors, magnetoresistive (MR) sensors, giant magnetoresistive (GMR) sensors, etc. and are not to be construed as limiting thereof. The plurality of sensors may include one or more motor position sensors configured to monitor and transmit motor portion information as at least one of the sensed input signals.

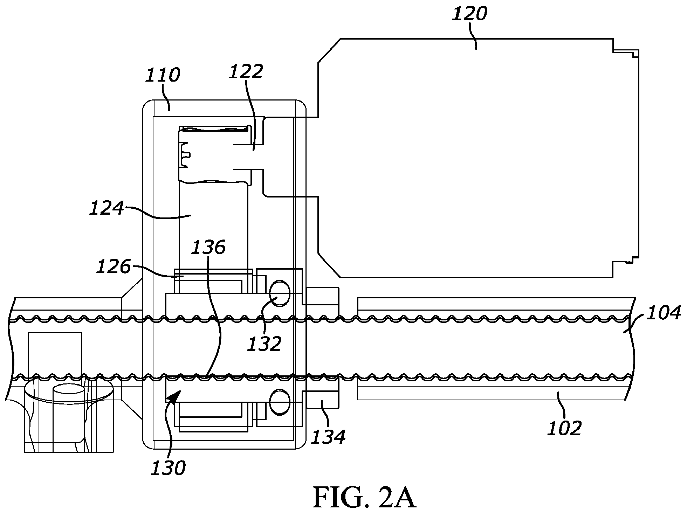

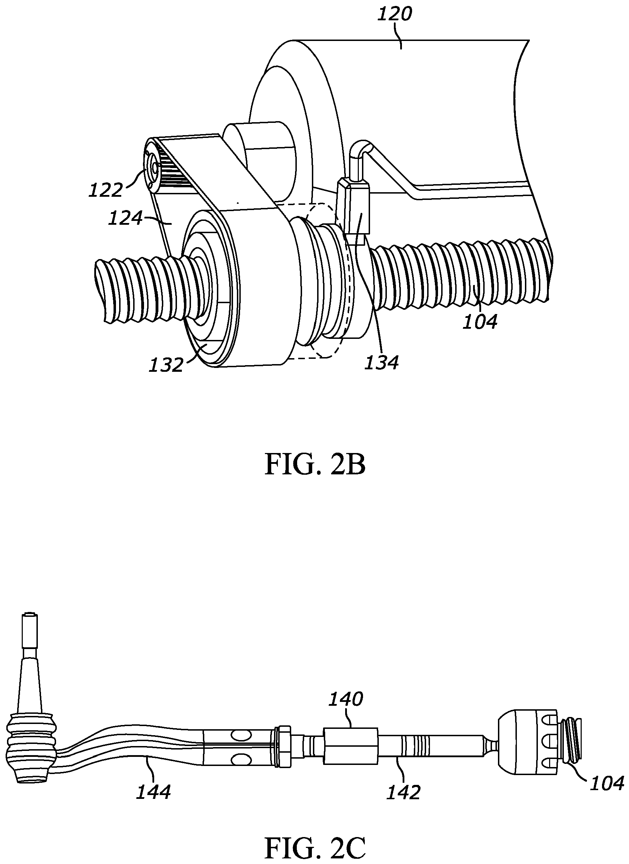

The configuration of the drive assembly housing 110 will be described in detail below. As illustrated in FIGS. 2A-B, drive assembly housing 110 contains a rack ball nut assembly (RBNA) 130, this is defined as the assembly of a rack bar 104, ball nut 136, ball bearings with return tube (not illustrated), pulley 126 and bearing assembly 132 (containing ball bearings). The cylindrical pulley 126 may be integrated with (e.g., encompassing/surrounding/etc.) the ball nut 136. The drive belt 124 may be secured to (e.g., wrapped around and engaged via belt profile or teeth) the motor output shaft 122 and the cylindrical pulley 126 to transmit a rotary motion generated by the EPP 120 and transmitted by the motor output shaft 122. As the drive belt 124 rotates, the cylindrical pulley 126 rotates, which facilitates function of the RBNA 130 to move the rack bar 104 between its axial positions. The RBNA 130 moving the rack bar 104 along its axial direction, as the drive belt 124 rotates the cylindrical pulley, through the utilization of one or more BNA bearing assemblies 132. In embodiments, the RBNA 130 may consist of a screw form, ball bearings, and return tube inside the ball nut 136 which is mated to the RBNA bearing assembly 132. This allows the ball nut 136 to rotate with its included screw form, which converts the rotary motion of the RBNA 130 into the linear displacement of the rack bar 104 via ball bearings and rack bar screw form and, as a result, changes the orientation of the wheels relative to the vehicle. This design enables efficient transmission of torque from the EPP 120 with minimal friction losses whilst allowing a robust system which minimizes component stresses. Thus, a driver's steering operation is assisted and asserted. Belt drive steering gears, such as the proposed system herein, offer a greater maximum load (for example, greater than 18kN) capability, larger transmission ratios and higher mechanical efficiency (e.g., less frictional losses).

In embodiments, EPS systems may incorporate angle sensor(s) (e.g., ball nut angle sensor(s) 134) into the RBNA 130 housing of the housing 102. The BNA angle sensor(s) 134 monitors the ball nut angle and transmits accurate steer angle information. In embodiments, the BNA angle sensor 134 may be a type of sensor such as hall Effect sensor, magneto-resistance sensor or giant magneto-Resistance type sensor, but not limited thereto. In the case of use of a wired sensor, the sensor cable then runs directly back to the ECU (often referred to as the Power Steering Control Module (PSCM)) linking to one or multiple connections, depending on whether the ECU contains one or two ECU lanes based on system redundancy requirements. In embodiments, the connection between sensor and ECU may be wireless and intermediaries may be integrated for relaying sensor information to the ECU. Using this information in conjunction with the MPS information, gathered from the motor position angle sensor(s), the BNA angle sensor 134 provides sufficient redundancies in the event of failure of one or more of the sensors that may be required to determine the absolute steer angle so that accurate steer angle information is available (and provided) for adequate function of the vehicle's steering system.

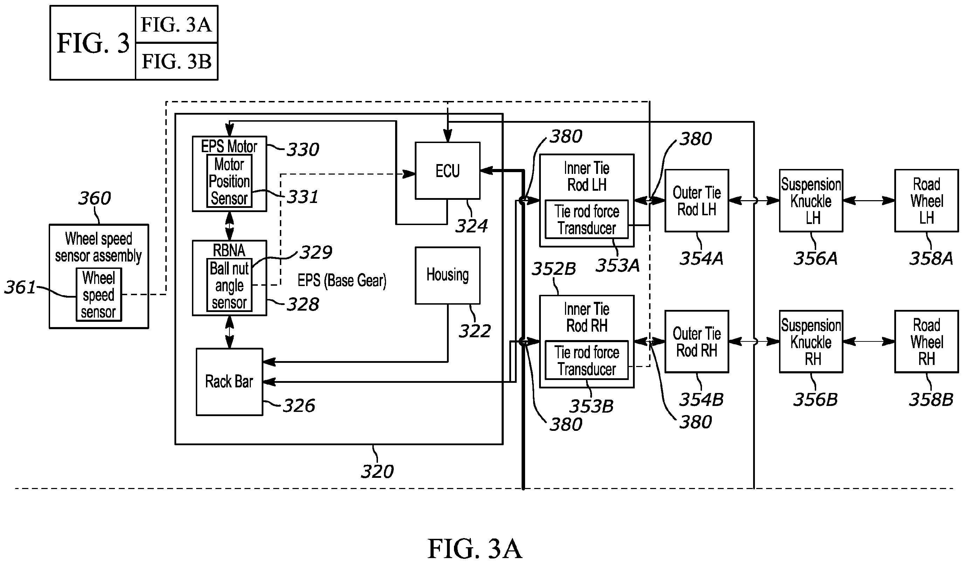

FIG. 2C illustrates a remaining left section of the EPS steering system 100, which may be mirrored by a right section either alternatively or additionally. In embodiments, the remaining left section may implement a force transducer (e.g., an inner tie rod force transducer) 140 as part of the inner tie rod 142 which couples the rack bar 104 to the outer tie rod 144. The Inner Tie Rod force transducer 140 may be connected to the ECU via a wired or wireless connection. Inner tie rod force transducer 140 may be implemented in conjunction with the various systems and methods as described herein. In embodiments, both left hand and right hand inner tie rod force transducers 140 may be configured to provide sufficient information for the ECU to determine and make available rack load data which can be transmitted to the SFM's ECU (via a wireless or wired connection), which can then determine the required SFM motor torque and apply this using the ECU's motor controller to apply a required torque and/or angle via the SFM motor (further illustrated in FIGS. 3A-B). The application of torque and/or angle by the SFM motor controls the steering angle and torque required received at the steering wheel by the driver.

FIG. 3A-B depicts a high-level block diagram of the communication between components of a steer-by-wire system which may include the EPS steering system, according to embodiments. In addition to the mechanical components and electrical components of the steer-by-wire system, as described herein, the steer-by-wire system may include a separate control system (ECU) which may be used to control the overall system and may communicate with other stability related systems and functions of the vehicle. The steering system may include at least a steering wheel 312 attached to a steering feedback module (SFM) 302. In embodiments, the steering feedback module (SFM) 302 may be coupled to the steering wheel 312 configured to transfer a driver's input torque and wheel angle to the SFM 302.

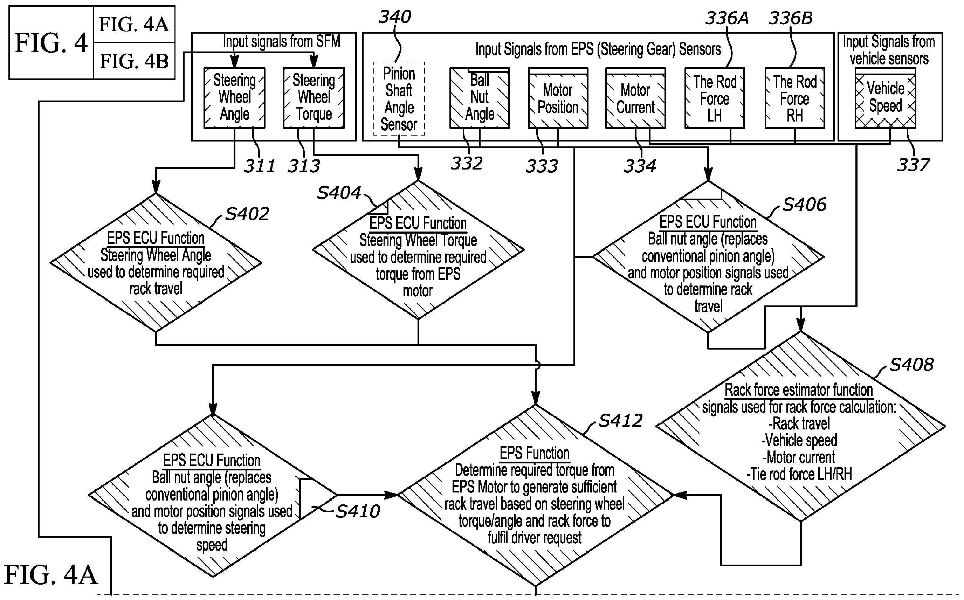

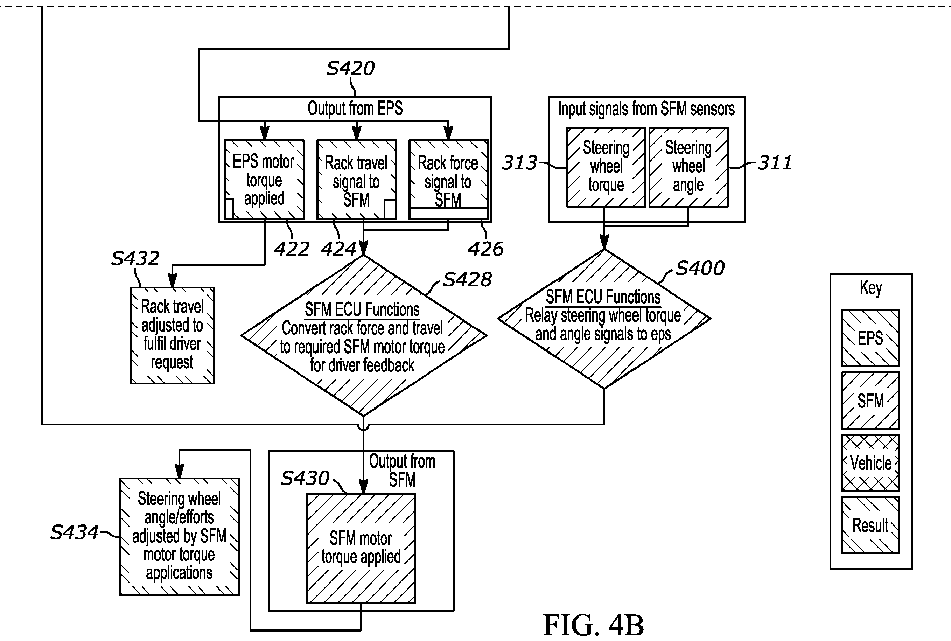

In response to a steering operation (e.g., user's steering wheel input), ECUs 304 and 324 may process the available vehicle information (e.g., the available MPS information, sensor(s) information, a variety of angle information, torque(s), etc. as describe in greater detail with reference to FIG. 4) as a feedback loop between the SFM 302 and EPS 320 systems. The feedback loop is configured to facilitate rack bar 326 movement in a linear motion (in accordance with the information available as depicted in FIG. 4), as described herein. The ECUs 304 and 324 are powered by power supply 370 and can therefore actuate the electric motors 306 and 330 in the SFM 302 and in the EPS 320. In embodiments, the SFM 302 may include an ECU 304 for control of the SFM 302 and processing information between components which includes feedback information to the EPS's ECU 324 of the steer-by-wire system, the SFM motor 306 and one or more torque and/or angle sensors 308. The SFM motor 306 including motor position sensor(s) 307 to monitor the SFM motor position and configured to transmit/make available said information between the ECU 304 and the ECU 320 for processing and steer operation/adjustment execution. In embodiments, torque and/or angle sensor(s) 308 (e.g., steering wheel torque sensor(s) 309 and/or steering wheel angle sensor(s) 310) may be configured to monitor steering wheel torque information 309. Torque and/or angle sensor(s) 308 may be configured to transmit/make available said information between the ECU 304 and the ECU 320 for processing and steer operation/adjustment.

Embodiments of the EPS (base gear) steering system 320, as described herein, may include housing 322, an ECU 324 for control of the EPS steering system 320 and processing information between components which includes feedback information to the SFM's ECU 304 of the steer-by-wire system, an EPS motor 330, a rack bar 326 and RBNA 328. During axial movement and stationary positioning of rack bar 326, RBNA 328 may include ball nut angle sensor(s) (BNA sensor) 329 configured to monitor and transmit/make available ball nut angle information based on the ball nut's angular position which is relative to the rack bar's 326 lateral displacement within the vehicle. Said information may be transmitted between the ECU 304 and the ECU 320 for processing and steer operation/adjustment. The EPS motor 330 may include motor position sensor(s) 331 configured to monitor the EPS motor position 307 and may be configured to transmit/make available said information between ECU 304 and ECU 320 for processing and steer operation/adjustment.

In embodiments, the EPS steering system may include an inner tie rod left portion 352A (comprising a tie rod force transducer 353A); an inner tie rod right portion 352B (comprising a tie rod force transducer 353B); an outer tie rod left portion 354A; an outer tie rod right portion 354B; a suspension knuckle left portion 356A; a suspension portion right portion 356B; a road wheel left portion 358A; and a road wheel right portion 358B. Inner tie rod left portion 352A; outer tie rod left portion 354A; suspension knuckle left portion 356A; and road wheel left portion 358A may be coupled to (e.g., to distribute the transfer of energy) and configured to facilitate transferring a user's (e.g., driver's) application of torque and angle of the steering wheel 312 into moving the rack bar 326 in the appropriate, calculated axial displacement (described in greater detail with reference to FIG. 4), which in turn rotates/adjusts the road wheel left portion's 358A and road wheel right portion's 358B angle about its steer axis relative to the vehicle in which it is coupled. Inner tie rod left portion 352A includes a tie rod force transducer 353A configured/used in combination to determine and make available rack load information and required output steering wheel torque from the SFM 302, as described herein. Tie rod force transducer 353A configured to transmit/make available said information to the ECU 324. One or more wheel speed sensor assemblies 360 may be configured to transmit/make available vehicle speed information to the EPS's ECU 324 via a vehicle ECU (external to the steering system) for processing and steer operation/adjustment. These wheel speed sensors may be separate from the steering system. Inner tie rod right portion 352B; outer tie rod right portion 354B; suspension knuckle right portion 356B; and road wheel right portion 358B similarly coupled and operable relative to their corresponding left portion counterpart components.

With additional reference to FIGS. 4A-B, FIGS. 4A-B depicts a high-level block logic diagram of an SbW system with sensor devices that processes various signals/information configured to facilitate steering of a vehicle, according to embodiments. In embodiments, input signals from the various sensors integrated with the SFM 302, the EPS 320 and the vehicle (e.g., wheel speed sensor assembly 360 and wheel speed sensor 361) may be monitored and this data provided to their corresponding ECUs 304 and/or 324. Steering wheel angle 311 may be monitored by the steering wheel angle sensor(s) 310 and provided the information to the SFM's ECU 304.

At step S400, the steering wheel angle 311 may be utilized to determine the required axial rack bar movement (e.g., based on the amount of steering wheel rotation input by the user, the rack bar is required to move a certain amount of distance in order to make appropriate road wheel 358A/B angle adjustments). Steering wheel torque 313 may be monitored by the steering wheel torque sensor(s) 309 of the torque/angle sensor(s) 308 and provided to the SFM's ECU 304. Steering wheel angle 311 and steering wheel torque 313 may be provided, by the ECU 304, as input signals from the SFM sensor(s) 308 to relay the signal(s)/information to the EPS 320.

At step S402, the steering wheel angle 311 may be used to determine the amount of axial rack bar movement that is required based on the amount of steering wheel rotation input by the user (e.g., determining the amount of distance the rack bar needs to move in order to make appropriate road wheel 358A/B angle adjustments based on the information monitored on the steering wheel). At step S404, the steering wheel torque 313 may be utilized along with other data provided to the EPS's ECU 324 to determine the required torque from the EPS motor 330.

From the EPS 320, input signals such as the ball nut angle 332 (monitored by ball nut angle sensor(s) 329 integrated with RBNA 328), motor position (monitored by motor position sensor(s) 333 integrated with the EPS motor 330), motor current 334, tie rod force of the left position 336A (monitored by tie rod force transducer 353A integrated with the inner tie rod left position 352A) and tie rod force of the right position 336B (monitored by tie rod force transducer 353B integrated with the inner tie rod right position 352B) may be utilized for road wheel 358A/B angle adjustments based on a user's steering wheel 312 input. At step S406, the ball nut angle 332 and motor position 333 signals/information are used to determine the amount of rack bar 326 movement. Utilizing the ball nut angle 332 (within RBNA) to facilitate rack bar movement enables the replacement and removal of conventional components normally required for monitoring and making such information available, as described herein.

At step S408, the calculated rack bar movement of step 406 is utilized with motor current 334, tie rod force left position 336, tie rod force right position 336B and vehicle speed 337 (monitored by wheel speed sensor(s) 361 integrated with wheel speed sensor assembly 360) to calculate the rack load and therefore the amount of motor torque necessary to appropriately move the rack bar 326.

At step S410, ball nut angle 332 and motor position 333 signals/information may also be utilized to determine steering speed (e.g., the speed at which the road wheels 358A/B adjusts their angle relative to the vehicle), which would otherwise be monitored and provided from conventional pinion angle(s) 341 (monitored by pinion shaft angle sensor(s) 340). Thus, eliminating the otherwise, necessary conventional pinion angle(s) 341 information (monitored by pinion shaft angle sensor(s) 340). At step S412, the determined rack bar movement (calculated at step S402), torque (calculated at step S404), rack bar force (calculated at step S408) and steering speed (calculated at step S410) is utilized to determine the required torque from the EPS motor 330 in order to generate sufficient rack bar movement to fulfill/correspond to the user's steering wheel operation(s)/input and the system's required output. At step S420, based on the calculated information as described herein, the EPS may output, for application in rack bar 326 and road wheel 358A/B adjustment(s), appropriate EPS motor torque 422, implementation signal(s) to the SFM regarding the amount of rack bar 326 movement 424 and the amount of rack bar force 426. At step S428, the implementation signal(s) from the EPS's ECU 324 are output from the EPS 320 to the SFM 302 (via ECUs 304 and 324) to convert the rack bar force and rack bar movement into the requisite SFM motor torque necessary for user feedback. At step S432, the rack bar 326 is adjusted to fulfill the steering request from the user's steering wheel rotation operation/input (based on output from the EPS 320 at step S420).

At step S430, the SFM motor torque is applied to the steering wheel 312. Thus, at step S432, the steering wheel's 312 angle is adjusted to complete step S434 based on feedback from the EPS 320.

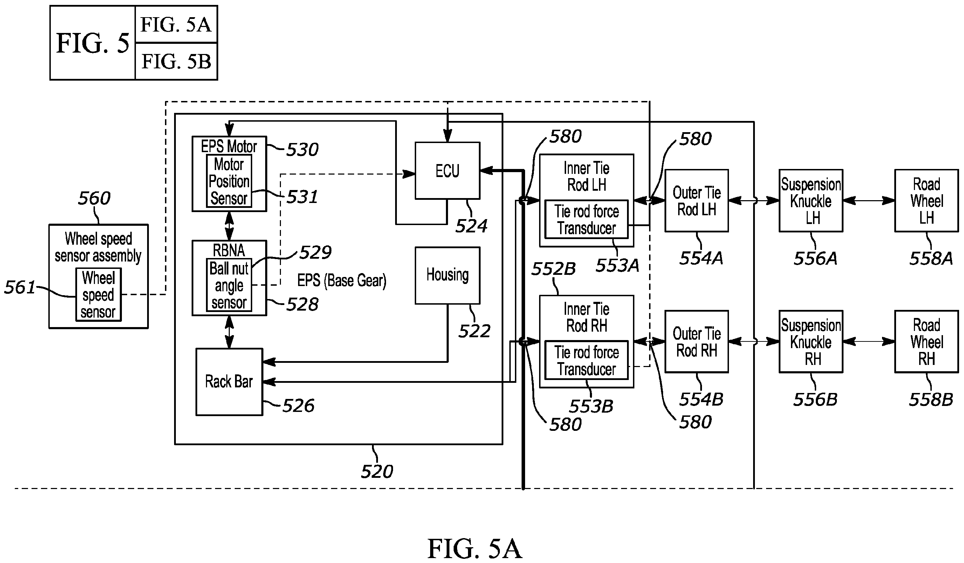

FIGS. 5A-B depicts a high-level block diagram of the communication between components of a steer-by-wire system which may include the EPS steering system, according to embodiments. In addition to the mechanical components and electrical components of the steer-by-wire system, as described herein, the steer-by-wire system may include a vehicle control unit (VCU) which may be used to control the overall system and may communicate with other stability related systems and functions of the vehicle, alternatively to an SFM (depicted in FIGS. 3A-B and 4A-B). In embodiments, the EPS (steering gear) 520 would, instead of using inputs signals from the SFM (generated by the driver, steering wheel angle(s), torque, etc. as input), receive inputs from the VCU 502. In embodiments, the VCU 502 receives information from external sensors such as wheel speed sensors, yaw rate sensors etc. In addition to this information from sensors, the VCU 502 may receive signals from an advanced driver assistance system (ADAS). For example, if an incident occurs in front of a vehicle, in which the SbW system with sensor devices is integrated, and an avoidance manoeuvre is required, the ADAS system will provide this information to the VCU 502 and the VCU 502 will calculate how to perform the avoidance manoeuvre, including what steer angle is required. In embodiments, eliminating the need for and SFM, steering wheel/interface no longer requires the need to provide feedback to the user (e.g., driver of the vehicle). The VCU 502, with its accompanying support systems (e.g., the ADAS) will control the vehicle and replace the driver.

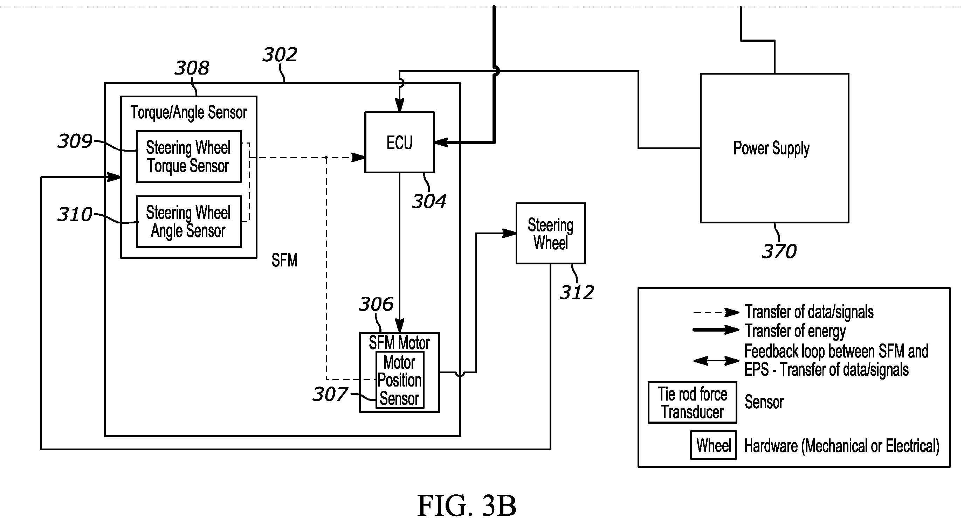

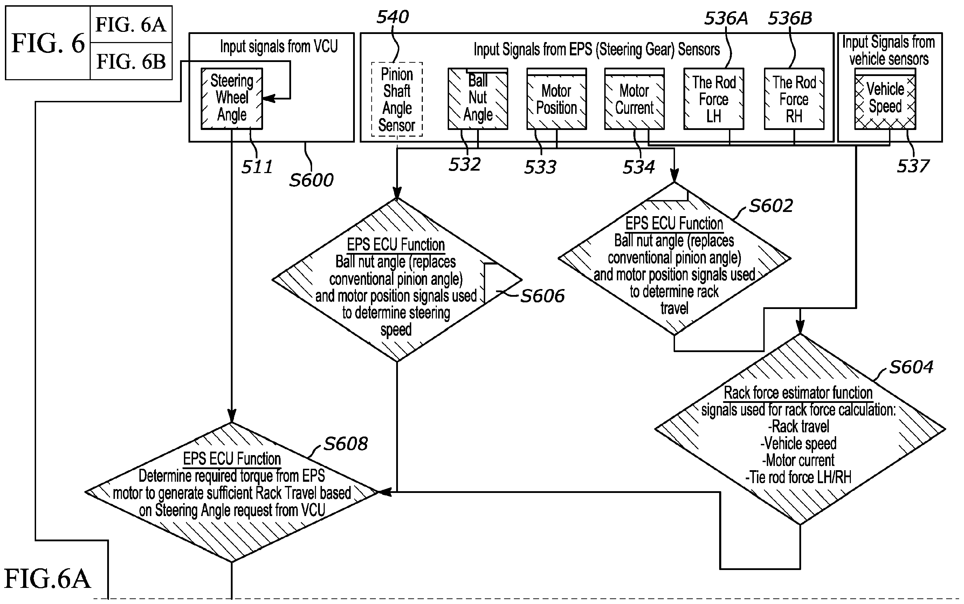

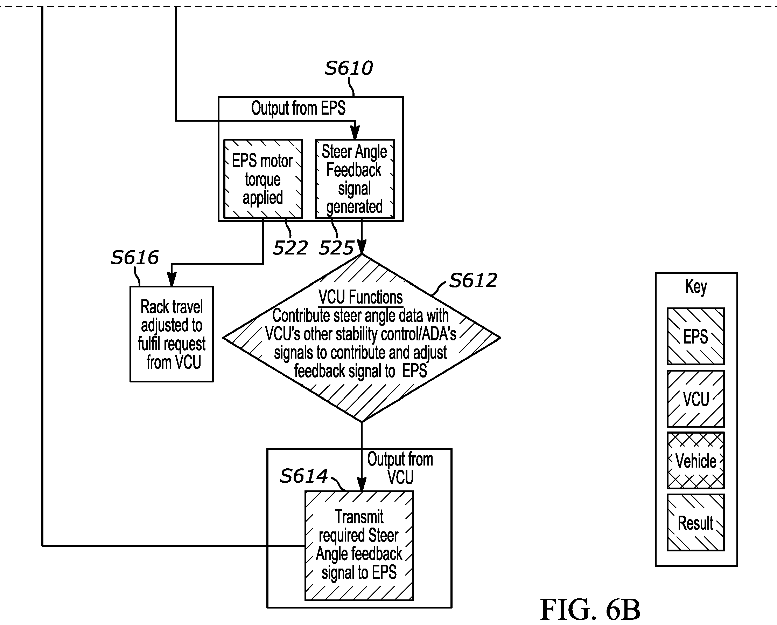

In response to a steering operation (e.g., sensed signals from the ADAS and determining the requirement of a steering maneuver), similarly described with reference to the EPS's ECU 320 and the SFM's ECU 304 of FIGS. 3-4, the EPS's ECU 524 and VCU 502 may process the available vehicle information (e.g., the available MPS information, sensor(s) information, a variety of angle information, torque(s), etc. as describe in greater detail with reference to FIG. 6) as a feedback loop between the VCU 502 and EPS 520 systems. The feedback loop is configured to facilitate rack bar 526 movement in a linear motion (in accordance with the information available as depicted in FIG. 6), as described herein. In embodiments, the feedback loop may comprise the transfer of data and signals. For example, the EPS 520 may send a steer angle signal to the VCU 502 and the VCU 502 may send the EPS 520 the steer angle requirement based on the various inputs from rest of vehicle.

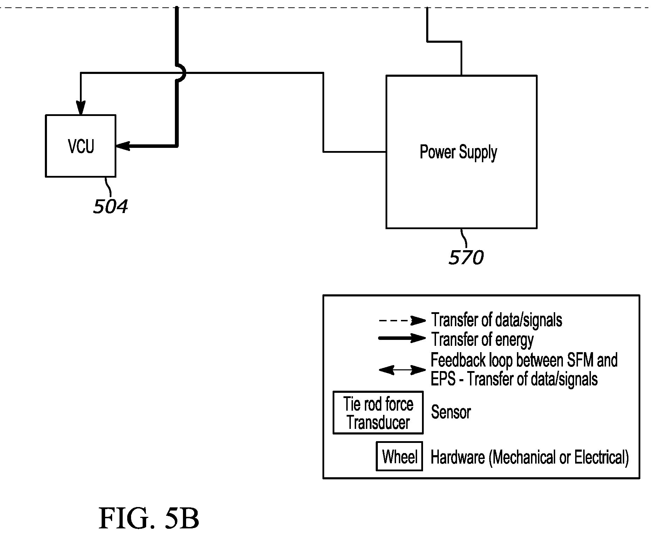

In embodiments, beyond the SFM/ECU being exchanged for the VCU 402, the remaining components provide the same functionality of those described in reference to FIGS. 3-4 and need not be duplicated with respect to FIG. 5.

With additional reference to FIGS. 6A-B, FIGS. 6A-B depicts a high-level block logic diagram of an SbW system with sensor devices that processes various signals/information configured to facilitate steering of a vehicle, according to embodiments. In embodiments, input signals from the various sensors integrated with the VCU 502, EPS 520 and the vehicle (e.g., wheel speed sensor assembly 560 and wheel speed sensor 561) may be monitored and this data provided to their corresponding ECU 524 and/or VCU 502 at step S600. The VCU may receive information from external sensors (e.g., wheel speed Sensors, yaw rate sensors, etc.) and signals from an Advanced Driver Assistance Systems (ADAS). The information received, such as the required steering angle 511, may be provided to the EPS's ECU 524.

From the EPS 520, input signals such as the ball nut angle 532 (monitored by ball nut angle sensor(s) 529 integrated with RBNA 528), motor position (monitored by motor position sensor(s) 533 integrated with the EPS motor 530), motor current 534, tie rod force of the left position 536A (monitored by tie rod force transducer 553A integrated with the inner tie rod left position 552A) and tie rod force of the right position 536B (monitored by tie rod force transducer 553B integrated with the inner tie rod right position 552B) may be utilized for road wheel 558A/B angle adjustments. At step S602, the ball nut angle 532 and motor position 533 signals/information are used to determine the amount of rack bar 526 travel. Utilizing the ball nut angle 532 (via ball nut angle senor(s) 529 within RBNA 528) to facilitate rack bar movement enables the replacement and removal of conventional components normally required for monitoring and making such information available, as described herein.

At step S604, the calculated rack bar movement of step S602 is utilized with motor current 534, tie rod force left position 536, tie rod force right position 536B and vehicle speed 537 (monitored by wheel speed sensor(s) 561 integrated with wheel speed sensor assembly 560) to calculate the rack load and therefore the amount of motor torque necessary to appropriately move the rack bar 326.

At step S606, the ball nut angle 532 and motor position 353 signals/information may also be utilized to determine steering speed (e.g., the speed at which the road wheels 358A/B adjusts their angle relative to the vehicle), which would otherwise be monitored and provided from conventional pinion angle(s) (monitored by pinion shaft angle sensor(s) 540). Thus, the otherwise, necessary conventional pinion angle(s) information (monitored by pinion shaft angle sensor(s) 540) may be eliminated.

At step S608, the determined required steer angle (determined at step S600), calculated rack bar movement (determined at step S602), rack bar force (calculated at step S604) and steering speed (calculated at step S606) is utilized to determine the required torque from the EPS motor 530 in order to generate sufficient rack bar movement based on the steer angle request from the VCU 530 of step S600.

At step S610, based on the calculated information as described herein, the EPS may output, for application in rack bar 526 and road wheel 558A/B adjustment(s), appropriate EPS motor torque 522 and a generated steer angle feedback signal 525. At step S612, the VCU 530 may combine the steer angle data (calculated through steps S600-S608) with the VCU's other stability control/ADAS signals to calculate and adjust the feedback signal to the EPS 520. At step S614, the VCU 502 may transmit the updated required steer angle feedback signal (i.e., in part an updated required steer angle), based on the combined information in step S612, to the EPS 520.

Thus, at step S616, the rack bar movement is adjusted to fulfill the steering request from the VCU 502 (based on output from the EPS 520 at step S610).

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations, and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

## Claims

1. An Electric Power Steering (EPS) system for a vehicle having a vehicle body having one or more wheels with an angled axis of rotation relative to the vehicle body, and having a drive assembly that causes a motor to generate power to rotate an output motor shaft, the rotational force converted to move a rack bar in a linear, axial direction, the EPS system comprising:
a plurality of sensors integrated within the EPS system configured to sense a plurality of input signals based on characteristics of the vehicle;
a drive belt coupled to the output motor shaft and a ball nut assembly, such that the drive belt transmits rotary motion to a cylindrical pulley coupled to the ball nut assembly, wherein the rotary motion causes a plurality of balls within the ball nut assembly to move the rack bar, such that the rack bar moves along a linear, axial direction;
one or more sensors of the plurality of sensors integrated within the ball nut assembly such that the one or more sensors sense a ball nut assembly angle as one of the plurality of input signals; and
in response to the rack bar moving along the linear, axial direction, alter the angled axis of the one or more wheels relative to the vehicle body to an extent determined based on the sensed input signals.

2. The EPS system according to claim 1, wherein the one or more sensors are configured to transmit the one or more ball nut angles such that the one or more ball nut angles provide steer angle information to accurately determine the extent of rack bar linear motion required based on the amount of rotary motion of the steering wheel.

3. The EPS system according to any one of the claims 1 or 2, wherein the at least one or more ball nut angles are used to determine sufficient rack bar linear movement, to the extent determined based on a rotary motion of a steering wheel and the sensed input signals without a pinion shaft.

4. The EPS system according to any one of the preceding claims, wherein the plurality of sensors include a steering wheel angle sensor configured to monitor and transmit steering wheel angle information and a steering wheel torque sensor configured to monitor and transmit steering wheel torque information, based on the rotary motion of the steering wheel.

5. The EPS system according to any one of the preceding claims, wherein at least the steering wheel angle information and steering wheel torque information are used to determine an amount of rack bar linear motion distance required and an amount of torque required by the EPP for sufficient rack bar linear motion, respectively, based on the rotary motion of the steering wheel.

6. The EPS system according to any one of the preceding claims, wherein one or more tie rod force transducers, integrated with one or more tie rods coupled with the rack bar, may be configured to monitor and transmit rack load information or a required amount of steering wheel torque information as at least one of the sensed input signals, wherein at least said information is used to estimate rack force calculations of the EPS system.

7. A steering system comprising:
a steering feedback module (SFM) comprising:
an SFM motor and one or more SFM sensors associated with the SFM, wherein the SFM sensors are configured to sense one or more SFM input signals based on a rotary motion input of a steering wheel, and
a first electronic control unit (ECU) to control the SFM and the one or more SFM input signals;
an electric power steering system (EPS) comprising:
one or more EPS sensors associated with the EPS, wherein the EPS sensors are configured to sense one or more EPS input signals based on characteristics of a vehicle,
an EPS motor configured to provide power to an output motor shaft for rotary movement and integrated with at least one of the EPS sensors to sense an EPS motor position, wherein at least one of the EPS input signals includes the EPS motor position,
a ball nut assembly integrated with at least one of the EPS sensors configured to sense a ball nut angle of the ball nut assembly, wherein at least one of the EPS input signals includes the ball nut angle,
a rack bar, wherein the rack bar moves about a linear axis actuated by a drive assembly, the drive assembly including a drive belt coupled to the output motor shaft and the ball nut assembly such that the drive belt transmits rotary motion, by rotary movement of the output shaft, to a cylindrical pulley coupled to the ball nut assembly and further transmits rotary motion to the ball nut assembly, and
a second ECU to control the EPS and the one or more EPS input signals, wherein the first ECU and second ECU are communicatively coupled; and
the first ECU transmits a signal to the second ECU, in response to the rotary motion input of the steering wheel, to activate the drive assembly, wherein the rack bar and angles of one or more wheels, coupled to the rack bar of the vehicle, are altered to a determined extent based on the SFM input signals and EPS input signals.

8. The steering system according to claim 7, wherein at least the ball nut angle and the EPS motor position are used to determine the extent of rack bar linear motion without a pinion shaft.

9. The steering system according to any one of the claims 7 or 8, wherein at least the ball nut angle and the motor position are used to determine a sufficient steering speed to the determined extent based on the SFM input signals and EPS input signals without a pinion shaft.

10. A method for accurately altering steering wheel angles of a vehicle comprising:
sensing, by a plurality of sensors, one or more input signals based on a plurality of vehicle characteristics wherein the plurality of sensors are associated with a steer-by-wire system, wherein one or more sensors of the plurality of sensors are sensing a ball nut angle within a ball nut assembly as one of the plurality of input signals;
determining a plurality of steering characteristics based on the one or more input signals;
actuating, by a drive assembly, linear motion of a rack bar based on the determined plurality of steering characteristics such that one or more wheel angles of the vehicle are altered.

11. The method of claim 10, further comprising: sensing the ball nut angle includes providing steer angle information to accurately determine at least one of a required amount of rack bar linear motion, steering speed and torque required for rack bar linear motion actuated by the drive assembly.

12. The method according to any one of the preceding claims, further comprising: determining a plurality of steering characteristics includes at least one of a required amount of rack bar linear motion, steering speed and torque required for rack bar linear motion, actuated by the drive assembly, without a pinion shaft.

13. The method according to any one of the preceding claims, wherein sensing one or more input signals based on characteristics of the vehicle include at least one characteristic from the rotary motion of the steering wheel including steering wheel torque information, steering wheel angle information and motor position information, wherein said information is sensed by at least one of the plurality of sensors.

14. A steering system comprising:
a vehicle control unit (VCU) configured to transmit and receive a first set of vehicle characteristics from one or more external sensors and calculate a required steer angle based on the first set of vehicle characteristics;
an electric power steering system (EPS) comprising:
one or more EPS sensors associated with the EPS, wherein the EPS sensors are configured to sense one or more EPS input signals based on a second set of vehicle characteristics,
an EPS motor configured to provide power to an output motor shaft for rotary movement and integrated with at least one of the EPS sensors to sense an EPS motor position, wherein at least one of the EPS input signals includes the EPS motor position,
a ball nut assembly integrated with at least one of the EPS sensors configured to sense a ball nut angle of the ball nut assembly, wherein at least one of the EPS input signals includes the ball nut angle,
a rack bar, wherein the rack bar moves about a linear axis actuated by a drive assembly, the drive assembly including a drive belt coupled to the output motor shaft and the ball nut assembly such that the drive belt transmits rotary motion, by rotary movement of the output shaft, to a cylindrical pulley coupled to the ball nut assembly and further transmits rotary motion to the ball nut assembly, and
an ECU to control the EPS and the one or more EPS input signals, wherein the VCU and the ECU are communicatively coupled; and
the VCU transmits the required steer angle to the ECU to activate the drive assembly, wherein the rack bar and angles of one or more wheels, coupled to the rack bar of the vehicle, are altered to a determined extent based on the first set of vehicle information and the EPS input signals.

15. The steering system of claim 14, wherein at least the ball nut angle and the EPS motor position are used to determine the extent of rack bar alteration without a pinion shaft.
